(19) **Europäisches Patentamt / European Patent Office / Office européen des brevets**

(11) **EP 3 120 714 B1**

(12) **EUROPEAN PATENT SPECIFICATION**

(45) Date of publication and mention
of the grant of the patent:
**12.12.2018  Bulletin 2018/50**

(21) Application number: **15764766.0**

(22) Date of filing: **11.03.2015**

(51) Int Cl.:
*A23L 5/00* *(2016.01)*     *A23L 31/15* *(2016.01)*
*A23L 3/005* *(2006.01)*     *A23L 27/23* *(2016.01)*
*A23L 33/145* *(2016.01)*

(86) International application number:
**PCT/JP2015/057077**

(87) International publication number:
**WO 2015/141531 (24.09.2015 Gazette 2015/38)**

(54) **METHOD OF PRODUCING YEAST EXTRACT**

VERFAHREN ZUR HERSTELLUNG VON HEFEEXTRAKT

PROCÉDÉ DE PRODUCTION D'EXTRAIT DE LEVURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.03.2014  JP 2014058530**

(43) Date of publication of application:
**25.01.2017  Bulletin 2017/04**

(73) Proprietor: **Asahi Group Holdings, Ltd.
Tokyo 130-8602 (JP)**

(72) Inventors:
• **INO Tomokazu
Moriya-shi
Ibaraki 302-0106 (JP)**

• **OKANO Hiroaki
Moriya-shi
Ibaraki 302-0106 (JP)**
• **MAEKAWA Syotaro
Moriya-shi
Ibaraki 302-0106 (JP)**

(74) Representative: **Gallois, Valérie
Cabinet Becker & Associés
25, rue Louis le Grand
75002 Paris (FR)**

(56) References cited:
**EP-A1- 0 299 078      EP-A1- 1 479 299
EP-A1- 2 256 184      WO-A1-88/05267
JP-A- H06 113 789      JP-A- 2002 306 120
JP-A- 2009 213 395      US-A- 5 085 875**

**Description**

[Technical Field]

The present invention relates to a method of producing a yeast extract with a high nucleic acid content.

[Background Art]

Yeast extracts are prepared from yeast cells and are rich in amino acids and the like, and are used conventionally as food additives such as seasonings for imparting flavor and body. With recent increases in the preference for natural products, the demand for yeast extracts as seasonings has shown a tendency to increase. Because it can be anticipated that yeast extracts prepared from yeasts containing abundant amounts of taste components will be able to be used as superior seasonings, the development of yeast extracts containing greater amounts of taste components is being actively pursued.

A number of methods of producing yeast extracts containing increased amounts of taste components, and particularly nucleic acids, have already been reported. For example, Patent Document 1 discloses a method of preparing a yeast extract with a high nucleic acid content by subjecting yeast cells that have been treated with an acidic aqueous solution to a heat treatment to inactivate the enzymes within the yeast cells, subsequently performing an alkali treatment to extract an extract, removing the fungal cell residues by centrifugal separation, and then treating the resulting supernatant with 5'-phosphodiesterase and deaminase. Further, Patent Document 2 discloses a method of preparing a yeast extract having a high nucleic acid content by subjecting a yeast suspension to alkali extraction, inactivating the protease and ribonuclease enzymes within the cells by heating, and subsequently treating the suspension with 5'-phosphodiesterase and 5'-adenylate deaminase. Moreover, Patent Document 3 discloses a method of preparing a yeast extract having a high nucleic acid content by subjecting yeast cells having an inherently high nucleic acid content to a sterilization treatment at a temperature of 40 to 95°C, subsequently performing a centrifugal separation treatment, treating the resulting supernatant with proteinase, nuclease and transaminase, and then subjecting the thus obtained enzyme degradation products to a heat treatment to inactivate the enzymes. In addition, EP0299078 discloses a natural yeast extract rich in 5'-GMP whereby the yeast cells are heated at 80 to 100°C for 30 minutes.

[Prior Art Literature]

[Patent Documents]

[Patent Document 1] Japanese Unexamined Patent Application, First Publication No. 2002-101846
[Patent Document 2] Japanese Patent No. 2,604,306
[Patent Document 3] Published Japanese Translation No. 2011-512130 of PCT

[Disclosure of the Invention]

[Problems to be Solved by the Invention]

In the method disclosed in Patent Document 1, a neutralization treatment and an alkali treatment are performed to neutralize after the acid treatment, and then another neutralization treatment must be performed to enable the enzyme treatment to be conducted. Consequently, the resulting yeast extract contains large amounts of neutral salts, resulting in a relatively lower nucleic acid content.

Further, in the method of Patent Document 2, because the alkali extraction is performed directly without first subjecting the fungal cells to a sterilization treatment, large amounts of substances other than nucleic acids are also extracted, as illustrated in the following examples, and therefore there tends to be a relative reduction in the nucleic acid content, and a comparative increase in the level of unpleasant flavors. In the method disclosed in Patent Document 3, not only is the sterilization treatment performed at a comparatively low temperature for a long period of time, but because all of the steps are performed under substantially acidic conditions, the nucleic acids are unable to be extracted successfully from the cells, as illustrated in the following examples.

The present invention has an object of providing a method of producing a yeast extract containing a higher concentration of nucleic acids, and particularly the tasty nucleic acids inosinic acid and guanylic acid, than has conventionally been possible. Means for Solving the Problems

As a result of intensive research aimed at achieving the above object, the inventors of the present invention discovered that by subjecting yeast cells to a sterilization treatment at a high temperature for a short period of time, subsequently performing an extraction treatment at a pH of 7 to 10, and then subjecting the extract obtained by removal of any fungal cell residues to a nuclease treatment and a deaminase treatment, a yeast extract with a higher nucleic acid content than has conventionally been possible was able to be obtained, and they were therefore able to complete the present invention. In other words, the present invention has constitutions described below.

[1] A method of producing a yeast extract including:
collecting yeast cells following culturing and optionally washing them;

(1) a step of subjecting the collected yeast cells to a heat sterilization at 100 to 130°C for 10 to 90 seconds,
(2) a step of preparing a yeast extract by subjecting the yeast cells sterilized in step (1) to an extraction treatment at 50 to 85°C and a pH of 7 to 10,
(3) a step, performed after step (2), of subjecting the obtained yeast extract to a solid-liquid separation treatment to remove at least a portion of the insoluble matter,
(4) a step, performed after step (3), of subjecting the yeast extract from which the insoluble matter has been removed to a nuclease treatment and a deaminase treatment, and
(5) a step, performed after step (4), of subjecting the yeast extract to a sterilization treatment.

[2] The method of producing a yeast extract according to [1] described above, wherein the extraction treatment in step (2) is performed at a pH of 7.4 to 10.
[3] The method of producing a yeast extract according to [1] or [2] described above, wherein the nuclease treatment and the deaminase treatment in step (4) are performed at a pH of at least 4.0 but less than 7.
[4] The method of producing a yeast extract according to any one of [1] to [3] described above, further including, after step (5):

(6) a filtering step of filtering the yeast extract, and
(7) a drying step of drying the filtrate obtained in the filtering step.

[5] The method of producing a yeast extract according to [4] described above, further including, after the filtering step (6) but before the drying step (7):

(6-1) a concentration step of concentrating the filtrate obtained in the filtering step (6), and
(6-2) a heat sterilization step of subjecting the concentrate obtained in the concentration step (6-1) to a heat sterilization treatment.

[6] The method of producing a yeast extract according to [4] or [5] described above, wherein the filtering is performed by diatomaceous earth filtration.

[Effects of the Invention]

By employing the method of producing a yeast extract according to the present invention, a yeast extract can be produced, from yeast cells, which has a higher nucleic acid content than that obtainable from conventional methods of producing yeast extracts.

[Brief Description of the Drawings]

[FIG. 1] A diagram illustrating the results of measuring the degradation rate for samples immediately before cell separation obtained using Methods 1 to 6 in Example 1.
[FIG. 2] A diagram illustrating the results of measuring the AIG content (%) relative to the solid fraction dry weight of the samples obtained in each step of Methods 1 to 6 in Example 1.
[FIG. 3] A diagram illustrating the results of measuring the degradation rate (%) for test samples m1 to m3 in which the extraction temperature was set to 70°C in Example 2.
[FIG. 4] A diagram illustrating the results of measuring the AIG content (%) of test samples m1 to m3 in which the extraction temperature was set to 70°C in Example 2.
[FIG. 5] A diagram illustrating the results of measuring the degradation rate (%) for test samples m2, m4 and m6 in which the extraction pH was set to 7.7 in Example 2.

[FIG. 6] A diagram illustrating the results of measuring the AIG content (%) of test samples m2, m4 and m6 in which the extraction pH was set to 7.7 in Example 2.

[FIG. 7] A diagram illustrating the results of measuring the degradation rate (%) for test samples m4 and m5 in which the extraction temperature was set to 75°C in Example 2.

[FIG. 8] A diagram illustrating the results of measuring the AIG content (%) of test samples m4 and m5 in which the extraction temperature was set to 75°C in Example 2.

[Embodiments for Carrying out the Invention]

The method of producing a yeast extract according to the present invention comprises collecting yeast cells following culturing and optionally washing them and the steps (1) to (5) described below:

(1) a step of subjecting the collected yeast cells to a heat sterilization at 100 to 130°C for 10 to 90 seconds,
(2) a step of preparing a yeast extract by subjecting the yeast cells sterilized in step (1) to an extraction treatment at 50 to 85°C and a pH of 7 to 10,
(3) a step, performed after step (2), of subjecting the obtained yeast extract to a solid-liquid separation to remove at least a portion of the insoluble matter,
(4) a step, performed after step (3), of subjecting the yeast extract from which the insoluble matter has been removed to a nuclease treatment and a deaminase treatment, and
(5) a step, performed after step (4), of subjecting the yeast extract to a heat sterilization treatment.

The yeast cells supplied to the method of producing a yeast extract according to the present invention may be any of various unicellular fungi, and specific examples include fungi belonging to the genus *Saccharomyces,* the genus *Schizosaccharomyces,* the genus *Pichia,* the genus *Candida,* the genus *Kluyveromyces,* the genus *Williopsis,* the genus *Debaryomyces,* the genus *Galactomyces,* the genus *Torulaspora,* the genus *Rhodotorula,* the genus *Yarrowia* and the genus *Zygosaccharomyces.* Among these, from the viewpoint of edibility, *Candida tropicalis, Candida lipolitica, Candida utilis, Candida sake,* and *Saccharomyces cerevisiae* and the like are preferred, and the widely used *Saccharomyces cerevisiae* and *Candida utilis* are particularly preferred.

The yeast cells supplied to the method of producing a yeast extract according to the present invention may be of a natural (wild) fungal strain (a fungal strain in which the genes have not been artificially modified), or of a mutant strain. Examples of mutant strains include mutant strains in which the nucleic acid content, and particularly the total content of inosinic acid and guanylic acid (hereafter also referred to as the "IG content"), has been increased by a mutation treatment such as an EMS (ethyl methanesulfonate) treatment. By using the method of producing a yeast extract according to the present invention, a yeast extract with a higher nucleic acid content than that obtainable by conventional methods of producing yeast extracts can be prepared, even from yeast cells having a low nucleic acid content.

Yeast cells cultured by typical methods can be used as the yeast cells supplied to the method of producing a yeast extract according to the present invention. The culture system used for the yeast cells may be a batch culture, a fed-batch culture or a continuous culture, although a fed-batch culture or continuous culture is typically employed in industrial applications.

There are no particular limitations on the medium composition used for culturing the yeast cells, and medium compositions used in typical methods may be used. For example, one or more substances selected from the group consisting of glucose, sucrose, acetic acid, ethanol, molasses, and sulfurous acid pulp waste liquor and the like used in conventional culturing of microorganisms can be used as the carbon source. Further, one or more substances selected from the group consisting of urea, ammonia, inorganic salts such as ammonium sulfate, ammonium chloride and ammonium phosphate, and nitrogen-containing organic substances such as corn steep liquor (CSL), casein, yeast extract and peptone are used as a nitrogen source. In addition, a phosphoric acid component, a potassium component and/or a magnesium component may also be added to the medium, and examples of these components include conventional industrial raw materials such as calcium superphosphate, ammonium phosphate, potassium chloride, potassium hydroxide, magnesium sulfate and magnesium chloride. Furthermore, inorganic salts containing zinc, copper, manganese or iron ions may also be used. Vitamins and the like may also be added.

The culturing conditions or the culturing conditions prior to pH adjustment may employ typical yeast culturing conditions, and for example the temperature is typically from 20 to 40°C, and preferably from 25 to 35°C, and the pH is typically from 3.5 to 7.5, and preferably from 4.0 to 6.0.

Furthermore, aerobic conditions are preferable, and culturing is preferably conducted while aeration and stirring are performed. The amount of aeration and the stirring conditions may be determined appropriately with due consideration of the culture volume and time, and the initial fungal concentration. For example, aeration may be conducted at about 0.2 to 2 V.V.M. (volume per volume per minute), and stirring may be conducted at about 50 to 900 rpm.

Following culturing, the yeast cells supplied to the method of producing a yeast extract according to the present invention are collected by centrifugal separation or the like, and are then preferably washed with water or a buffer or the like. This washing can suppress contamination of the yeast extract with components derived from the culture medium. There are no particular limitations on the buffer used for washing, provided there is no possibility of loss of the yeast itself, and the buffer may be selected appropriately from among buffers such as PBS (phosphate-buffered saline) that are typically used in the washing and the like of microorganisms such as yeast.

In the method of producing a yeast extract according to the present invention, first, as step (1), the yeast cells are subjected to a heat sterilization at 100 to 130°C for 10 to 90 seconds. In the present invention, by performing a heat sterilization prior to extraction of an extract from the yeast cells, enzymes derived from the yeast cells are inactivated, but by conducting the sterilization treatment for only a short time at this point, the nucleic acid content within the extract extracted from the fungal cells can be increased compared with the case where the sterilization treatment is performed for a comparatively long period of time. The temperature of the sterilization treatment is preferably from 100 to 125°C, more preferably from 110 to 125°C, and still more preferably from 115 to 125°C. The time of the sterilization treatment is preferably from 20 to 90 seconds, more preferably from 30 to 90 seconds, and still more preferably from 40 to 80 seconds. The sterilization method may use, for example, a UHT (ultra high temperature) sterilization device, or an autoclave.

Next, as step (2), a yeast extract is prepared by subjecting the yeast cells sterilized in step (1) to an extraction treatment at 50 to 85°C and a pH of 7 to 10. The pH of this extraction treatment is preferably from 7.4 to 10, more preferably from 7.7 to 10, and still more preferably from 7.7 to 9.5. By extracting the nucleic acids under neutral to alkaline conditions, and particularly under alkaline conditions, the nucleic acids can be extracted from the yeast cells with good efficiency.

The temperature of the extraction treatment is preferably from 50 to 85°C, more preferably from 55 to 75°C, still more preferably from 60 to 75°C, and most preferably from 65 to 75°C. There are no particular limitations on the time of the extraction treatment, provided that the time is sufficient to allow satisfactory extraction of an extract from the yeast cells, and the time may be set appropriately with due consideration of factors such as the weight of fungal cells being treated and the temperature of the extraction treatment. In the present invention, the extraction treatment time is preferably from 30 minutes to 12 hours, more preferably from 1 to 9 hours, and still more preferably from 1 to 6 hours. Further, the extraction treatment may be performed at a constant temperature, or the temperature may be altered partway through the extraction. For example, heating may be performed at 80°C for a period of 30 minutes to 2 hours, and then at 55 to 70°C for a period of 30 minutes to 5 hours. In those cases where the pH of the extraction treatment is comparatively low, by increasing the extraction temperature and lengthening the extraction time, a satisfactory amount of nucleic acids, similar to that obtainable under conditions where the pH is comparatively high, can be extracted.

Subsequently, as step (3), the yeast extract obtained in step (2) is subjected to a solid-liquid separation to remove at least a portion of the insoluble matter (fungal cell residues). This removal process removes mainly the yeast cell walls. The solid-liquid separation method may be selected appropriately from any of various methods such as sedimentation, centrifugal separation, filtration, decantation, and squeezing. In the subsequent enzyme reactions, the pH is adjusted to acidic conditions as this represents optimal conditions for the enzymes, but this pH adjustment can cause the nucleic acids extracted into the liquid fraction to be reabsorbed into the fungal cell residues. In the present invention, by removing the fungal cell residues in advance, prior to the neutralization treatment, loss of nucleic acids due to reabsorption into the fungal cell residues during the neutralization treatment can be suppressed, and as a result, the nucleic acid content in the final yeast extract can be increased.

Next, as step (4), the yeast extract from which the insoluble matter has been removed in step (3) is subjected to a nuclease treatment and a deaminase treatment. By subjecting the nucleic acids in the yeast extract to a nuclease treatment, the tasty nucleic acid guanylic acid is produced. Further, by subjecting the adenylic acid obtained from the nuclease treatment to a deaminase treatment, the tasty nucleic acid inosinic acid is produced.

The nuclease treatment and the deaminase treatment may each use any of the various commercially available enzymes. In each of these enzyme treatments, the temperature, the pH, the amount of enzyme added and the enzyme treatment time may be selected appropriately with due consideration of factors such as the type of enzyme being used, the strength of the enzymatic activity, and the concentration of the yeast extract being treated. Further, the order of the enzyme treatments should be controlled to enable deaminase treatment of the nuclease treated product, and therefore either the nuclease treatment may be performed first, and the deaminase then added to the resulting yeast extract to perform the deaminase treatment, or in those cases where the nuclease and the deaminase being used both exhibit enzymatic activity at the same temperature, the nuclease and the deaminase may be added together to the yeast extract, so that the two enzyme treatments are performed simultaneously.

For example, inosinic acid and guanylic acid can be produced in favorable amounts by adjusting the pH of the yeast extract from which the insoluble matter has been removed to a pH of at least 4.0 but less than 7, and preferably a pH of 4.5 to 6.0, subsequently adding the nuclease and performing a nuclease treatment at 60 to 80°C for 30 minutes to 12 hours, and then adding the deaminase and performing a deaminase treatment at 40 to 60°C for 30 minutes to 6 hours.

Subsequently, as step (5), the yeast extract obtained following the enzyme treatments is subjected to a heat sterilization treatment. By performing this heat sterilization treatment, any incorporated nuclease and deaminase can also be inactivated, and therefore the temperature of the heat sterilization treatment is preferably sufficient to enable inactivation of the added nuclease and deaminase. For example, by performing a heat treatment at 80 to 120°C, preferably 80 to 105°C, and more preferably 90 to 105°C, for a period of 15 seconds to 30 minutes, and preferably 15 to 90 seconds, sterilization and enzyme inactivation can be achieved simultaneously.

The sterilized yeast extract obtained in step (5) may be used without further modification as a yeast extract, but insoluble matter is preferably removed in a filtering step (6) using a filtration treatment, centrifugal separation treatment or settling treatment or the like. Performing a diatomaceous earth filtration treatment is particularly desirable as it not only enables the removal of insoluble matter, but also enables the adsorption and removal of other substances that can cause unpleasant flavors or the like. In order to ensure that the pH of the final yeast extract satisfies the desired pH range, a pH adjustment is preferably performed either before or after the removal of unwanted matter.

The sterilized yeast extract obtained in step (5), or the yeast extract obtained following the removal of insoluble matter from the yeast extract obtained in step (5), may be subjected to a drying step (7). Further, in order to adjust the solid fraction dry weight to the desired concentration, a concentration step (6-1) of appropriately concentrating the extract may be performed after the filtering step (6) but before the drying step (7). This concentration step may be conducted using a method selected appropriately from among known concentration methods such as evaporation methods, freeze concentration methods, and reverse osmosis concentration methods.

The yeast extract obtained following the removal of insoluble matter or following the concentration step may be further subjected to a heat sterilization treatment step (6-2). This heat sterilization treatment may be performed in the same manner as the heat sterilization treatments in step (1) and step (5). A UHT sterilization treatment is preferred, as the chance of impairing the flavor of the yeast extract is minimal.

By subjecting the yeast extract obtained from the method of producing a yeast extract according to the present invention to a drying treatment to convert the extract to powder form, a yeast extract powder with a high nucleic acid content can be obtained. For example, a powdered yeast extract can be obtained by adjusting the pH of the yeast extract obtained following the filtration treatment to a neutral pH as required, subsequently concentrating the extract to a desired concentration, adding other additives such as table salt and dextrin as required, and then performing the drying treatment. Any typically used method may be used for preparing the yeast extract powder, but freeze drying methods, spray drying methods, and drum drying methods are typically employed in industrial applications.

The thus obtained yeast extract or yeast extract powder may be used as a seasoning composition. The seasoning composition may be composed solely of the yeast extract obtained in the present invention, or may also include other components such as stabilizers and preservatives in addition to the yeast extract obtained in the present invention. Specifically, a seasoning composition can be prepared by adding and mixing any other required components with the yeast extract or the powder thereof. This seasoning composition can be used as appropriate in all manner of foods and drinks in a similar manner to other seasoning compositions.

Moreover, the obtained yeast extract or powder thereof can also be added directly to foods and drinks as a raw material. Specifically, in the production process for a food or drink, the yeast extract or yeast extract powder obtained in the present invention may be added in the same manner as other raw materials. Examples of the food or drink include any foods or drinks to which yeast extracts or seasoning compositions containing a yeast extract are typically added, and specific examples include alcoholic drinks, soft drinks, fermented foods, seasonings, soups, breads and confectionery.

In this manner, the method of producing a yeast extract according to the present invention can be used to prepare a yeast extract with a high nucleic acid content. For example, even using yeast cells for which a conventional production method such as a hot water extraction method is only capable of preparing a yeast extract with a dry weight IG content of about 5 to 8% by mass, the method of producing a yeast extract according to the present invention is capable of producing a yeast extract with a dry weight IG content of at least 15% by mass, preferably 15 to 30% by mass, and more preferably 20 to 30% by mass.

Accordingly, the yeast extract obtained using the method of producing a yeast extract according to the present invention has particularly superior taste, and by using the extract in foods and drinks and the like, foods and drinks with excellent depth of flavor and body can be produced.

The "yeast extract dry weight IG content (total content of inosinic acid and guanylic acid)" means the proportion (% by mass) of the total amount of inosinic acid and guanylic acid (calculated as the 2Na heptahydrate) contained within the solid fraction obtained by drying the yeast extract.

Further, the amounts of inosinic acid and guanylic acid can be determined, for example, from the respective peak surface areas in a chromatograph obtained by HPLC (high performance liquid chromatography) analysis using a C18 column (ODS column). The method used for quantifying the peak surface areas may employ either an area percentage method, or determination of the ratio of the peak surface area relative to the peak surface area of a standard of known concentration.

[Examples]

The present invention is described below in further detail using a series of examples.

[Example 1]

Yeast extracts were prepared by subjecting extracts extracted from yeast cells to a nuclease treatment and a deaminase treatment. Specifically, yeast extracts were prepared in accordance with the six methods described below, and the dry weight IG content (total content of inosinic acid and guanylic acid) of the thus obtained yeast extracts were compared.

<Preparation of Yeast Culture>

A 2% agar-containing YPD plate medium was inoculated with cells of the Saccharomyces cerevisiae AB5814 strain, static culturing was performed overnight in an incubator at 30°C to prepare a subculture plate, and the plate was stored at 4°C.

One platinum loop of the AB5814 strain colony was collected from the subculture plate and inoculated into 50 mL of a YPD medium, and the liquid obtained upon overnight culture at 30°C was used as a preculture liquid. Subsequently, the thus obtained preculture liquid was inoculated into 1.5 mL of a YPD medium to achieve an initial cell count of $1 \times 10^7$ cells/mL, and a shaking culture was performed in a 30°C incubator for 16 hours with a stirring rate of 200 rpm. A portion of the supernatant obtained by subjecting the thus obtained culture to a centrifugal separation treatment was then removed to prepare a yeast cell suspension (yeast suspension) with a solid fraction of 15% by mass.

<Method 1>

First, the prepared yeast suspension (with a fungal cell solid fraction concentration of 15% by mass) was subjected to UHT sterilization at 120°C for 40 seconds. A 25% by mass aqueous solution of sodium hydroxide (23.2 g) was added to the sterilized yeast suspension to adjust the pH to 9.0, and an extraction treatment was then performed by incubation at 65°C for 90 minutes. Following the extraction treatment, a portion of the yeast suspension (yeast extract) was sampled for measurement purposes (sample immediately before cell separation).

The remaining yeast extract was subjected to a centrifugal separation treatment, the supernatant (yeast extract) was collected and heated to 70°C, and a portion of the supernatant was then sampled for measurement purposes (sample after reaching 70°C). A 47% by mass aqueous solution of sulfuric acid (8.9 g) was added to the remaining yeast extract to adjust the pH to 5.0, and a portion of the extract was then sampled for measurement purposes (sample after pH adjustment). Subsequently, a 0.3% by mass 5'-phosphodiesterase (product name: Sumizyme NP, manufactured by ShinNihon Chemicals Corporation) was added to the remaining yeast extract, and a nuclease treatment was performed by incubation at 70°C for 6 hours. Following the nuclease treatment, a portion of the yeast extract was sampled for measurement purposes (sample after Nuc reaction), and the remaining yeast extract was adjusted to 50°C, a 0.2% by mass 5'-adenylate deaminase (product name: Deamizyme G, manufactured by Amano Enzyme Inc.) was added, and a deaminase treatment was performed by incubation at 50°C for 3 hours. Following the deaminase treatment, a portion of the yeast extract was sampled for measurement purposes (sample after Dea reaction), and the remaining yeast extract was subjected to an inactivation treatment by heating at 100°C for 40 seconds, filtered through diatomaceous earth, concentrated to achieve a solid fraction dry weight of 25 to 50% by mass, and then subjected to another UHT sterilization treatment by heating at 100°C for 47 seconds. Following this UHT sterilization treatment, a portion of the yeast extract was sampled for measurement purposes (sample after UHT2), and the reamining extract was dried by spray drying to obtain a powdered yeast extract 1 (sample after SD).

<Method 2>

First, the prepared yeast suspension (with a fungal cell solid fraction concentration of 15% by mass) was subjected to UHT sterilization at 120°C for 40 seconds. A 25% by mass aqueous solution of sodium hydroxide (10.0 g) was added to the sterilized yeast suspension to adjust the pH to 7.9, and an extraction treatment was then performed by incubation at 70°C for 180 minutes. Following the extraction treatment, a portion of the yeast suspension (yeast extract) was sampled for measurement purposes (sample immediately before cell separation).

The remaining yeast extract was subjected to a centrifugal separation treatment, the supernatant (yeast extract) was collected, and with the temperature held at 70°C, a portion of the supernatant was sampled for measurement purposes (sample after reaching 70°C). A 47% by mass aqueous solution of sulfuric acid (4.4 g) was added to the remaining yeast extract to adjust the pH to 5.0, and a portion of the extract was then sampled for measurement purposes (sample after pH adjustment). Subsequently, the same procedures as those described in method 1 were used to subject the remaining yeast extract to a nuclease treatment and then a deaminase treatment, followed by an inactivation treatment, a diatomaceous earth filtration treatment, a concentration treatment and a sterilization treatment, and the yeast extract was then dried by spray drying to obtain a powdered yeast extract 2.

<Method 3> (comparative example)

First, a 47% by mass aqueous solution of sulfuric acid (16.21 g) was added to the prepared yeast suspension (with a fungal cell solid fraction concentration of 15% by mass) to adjust the pH to 3.5, and an incubation was performed at 60°C for 30 minutes (acid treatment). Following the acid treatment, the yeast suspension was subjected to UHT sterilization at 120°C for 40 seconds, a 25% by mass aqueous solution of sodium hydroxide (53.6 g) was added to the sterilized yeast suspension to adjust the pH to 9.0, and an extraction treatment was then performed by incubation at 65°C for 90 minutes. Following the extraction treatment, a portion of the yeast suspension (yeast extract) was sampled for measurement purposes (sample immediately before cell separation).

The remaining yeast extract was subjected to a centrifugal separation treatment, the supernatant (yeast extract) was collected and heated to 70°C, and a portion of the supernatant was then sampled for measurement purposes (sample after reaching 70°C). A 47% by mass aqueous solution of sulfuric acid (9.9 g) was added to the remaining yeast extract to adjust the pH to 5.0, and a portion of the extract was then sampled for measurement purposes (sample after pH adjustment). Subsequently, the same procedures as those described in method 1 were used to subject the remaining yeast extract to a nuclease treatment and then a deaminase treatment, followed by an inactivation treatment, a diatomaceous earth filtration treatment, a concentration treatment and a sterilization treatment, and the yeast extract was then dried by spray drying to obtain a powdered yeast extract 3.

<Method 4> (comparative example)

First, a 25% by mass aqueous solution of sodium hydroxide (29.9 g) was added to the prepared yeast suspension (with a fungal cell solid fraction concentration of 15% by mass) to adjust the pH to 9.0, and an extraction treatment was performed by incubation at 65°C for 90 minutes. Following the extraction treatment, the yeast suspension (yeast extract) was subjected to UHT sterilization at 120°C for 40 seconds, and a portion of the sterilized yeast extract was sampled for measurement purposes (sample immediately before cell separation).

The remaining yeast extract was subjected to a centrifugal separation treatment, the supernatant (yeast extract) was collected and heated to 70°C, and a portion of the supernatant was then sampled for measurement purposes (sample after reaching 70°C). A 47% by mass aqueous solution of sulfuric acid (5.0 g) was added to the remaining yeast extract to adjust the pH to 5.0, and a portion of the extract was then sampled for measurement purposes (sample after pH adjustment). Subsequently, the same procedures as those described in method 1 were used to subject the remaining yeast extract to a nuclease treatment and then a deaminase treatment, followed by an inactivation treatment, a diatomaceous earth filtration treatment, a concentration treatment and a sterilization treatment, and the yeast extract was then dried by spray drying to obtain a powdered yeast extract 4.

<Method 5> (comparative example)

First, the prepared yeast suspension (with a fungal cell solid fraction concentration of 15% by mass) was subjected to a sterilization treatment by incubation at 60°C for 30 minutes. A 25% by mass aqueous solution of sodium hydroxide (29.9 g) was added to the sterilized yeast suspension to adjust the pH to 9.0, and an extraction treatment was then performed by incubation at 65°C for 90 minutes. Following the extraction treatment, a portion of the yeast suspension (yeast extract) was sampled for measurement purposes (sample immediately before cell separation).

The remaining yeast extract was subjected to a centrifugal separation treatment, the supernatant (yeast extract) was collected and heated to 70°C, and a portion of the supernatant was then sampled for measurement purposes (sample after reaching 70°C). A 47% by mass aqueous solution of sulfuric acid (11.3 g) was added to the remaining yeast extract to adjust the pH to 5.0, and a portion of the extract was then sampled for measurement purposes (sample after pH adjustment). Subsequently, the same procedures as those described in method 1 were used to subject the remaining yeast extract to a nuclease treatment and then a deaminase treatment, followed by an inactivation treatment, a diatomaceous earth filtration treatment, a concentration treatment and a sterilization treatment, and the yeast extract was then dried by spray drying to obtain a powdered yeast extract 5.

<Method 6> (comparative example)

First, the prepared yeast suspension (with a fungal cell solid fraction concentration of 15% by mass) was subjected to a sterilization treatment by incubation at 60°C for 30 minutes. Following the sterilization treatment, a portion of the yeast suspension was sampled for measurement purposes (sample immediately before cell separation), while the remaining yeast suspension was subjected to a centrifugal separation treatment, and the supernatant was collected. The collected supernatant was heated to 70°C, and a portion of the supernatant was then sampled for measurement purposes (sample after reaching 70°C). A 47% by mass aqueous solution of sulfuric acid (2.1 g) was added to the remaining yeast extract to adjust the pH to 5.0, and a portion of the extract was then sampled for measurement purposes (sample after pH adjustment). Subsequently, the same procedures as those described in method 1 were used to subject the remaining yeast extract to a nuclease treatment and then a deaminase treatment, followed by an inactivation treatment, a diatomaceous earth filtration treatment, a concentration treatment and a sterilization treatment, and the yeast extract was then dried by spray drying to obtain a powdered yeast extract 6.

<Degradation Rate>

The yeast extract degradation rate was investigated for the samples that were sampled in each method immediately prior to separation and collection of the fungal cells by centrifugal separation (the samples immediately before cell separation). The degradation rate (%) indicates the proportion of the extract fraction (soluble solid fraction) within the total solid fraction in the yeast suspension, and is calculated based on a formula (a) shown below. In the formula, "A" represents the water fraction (% by mass) in the sample (extract suspension), and "B" represents the water fraction (% by mass) in the supernatant obtained by subjecting the sample to a centrifugal separation treatment.

$$\text{Formula (a):  Degradation rate (\%)} = [A \times (100-B)]/[B \times (100-A)] \times 100$$

<Measurement of AIG Content>

The concentrations of adenylic acid, inosinic acid and guanylic acid in each sample obtained in each of the above methods were calculated from the ratio between the surface area of the corresponding peak in a chromatograph obtained by HPLC analysis using a C18 column, and the peak surface area of a standard of known concentration. Inosine 5'-monophosphate (manufactured by Sigma-Aldrich Co. LLC.) was used as the standard for inosinic acid, guanosine 5'-monophosphate disodium salt hydrate (manufactured by Sigma-Aldrich Co. LLC.) was used as the standard for guanylic acid, and adenosine 5'-monophosphate sodium salt (manufactured by Sigma-Aldrich Co. LLC.) was used as the standard for adenylic acid.

Specifically, first a sample having a solid fraction weight of 1.00 to 1.05 g was dissolved in ultra pure water to prepare a sample solution of 100 mL, and this sample was diluted with ultra pure water to prepare a dilute solution. Subsequently, 1 mL of this dilute solution was filtered using a Millex (a registered trademark) syringe filter, 200 μL of the resulting filtrate was transferred into an HPLC vial, HPLC was performed under the conditions described below, and the concentrations of adenylic acid (A), inosinic acid (I) and guanylic acid (G) were determined from the corresponding peak surface areas in the chromatograph.

HPLC apparatus: Alliance e2695 (manufactured by Waters Corporation)
Column: YMC Hydrosphere C18 (manufactured by YMC Co., Ltd.)
Detector: UV detector 2489 (manufactured by Waters Corporation)
Mobile phase: 100 mmol/L potassium dihydrogen phosphate solution containing 5 mmol/L of tetrabutylammonium hydroxide (pH 3.9)
Injection volume: 10 μL
Column temperature: 35°C
Flow rate: 1 mL/minute
Detection wavelength: 250 nm
Analysis time: 60 minutes

For each sample, the proportion of the total content of adenylic acid, inosinic acid and guanylic acid (calculated as the 2Na heptahydrates) within the solid fraction dry weight (hereafter also referred to as the "AIG content") was calculated based on a formula (b) shown below. In the formula, the "HPLC measured value of adenylic acid (ppm)" refers to the concentration of adenylic acid (calculated as the 2Na heptahydrate) calculated from the HPLC chromatograph peak surface area ratio, the "HPLC measured value of inosinic acid (ppm)" refers to the concentration of inosinic acid (calculated as the 2Na heptahydrate) calculated from the HPLC chromatograph peak surface area ratio, the "HPLC measured value of guanylic acid (ppm)" refers to the concentration of guanylic acid (calculated as the 2Na heptahydrate) calculated from the HPLC chromatograph peak surface area ratio, "C" represents the dilution rate used when the sample solution was diluted with ultra pure water, "D" represents the solid fraction weight (g) of each sample used in preparing the sample solution, and "DM (%)" represents the solid fraction dry weight proportion ([solid fraction dry weight (g)]/[solid fraction weight (g)]×100) for each sample (powder). Further, in the formula, 1.496, 1.494 and 1.476 represent the coefficients used when converting the amounts of adenylic acid, inosinic acid and guanylic acid respectively to the corresponding 2Na heptahydrate.

$$\text{Formula (b): [AIG Content (\%)]} = \{([\text{HPLC measured value of adenylic acid (ppm)}]\times1.496) + ([\text{HPLC measured value of inosinic acid (ppm)}]\times1.494) + ([\text{HPLC measured value of guanylic acid (ppm)}]\times1.476)\}/1000 \times C/D/[DM(\%)] \times 100$$

In each sample obtained following completion of the deamination reaction, the adenylic acid within the sample has been converted to inosinic acid, and therefore the "AIG content (%)" corresponds with the "IG content (%)".

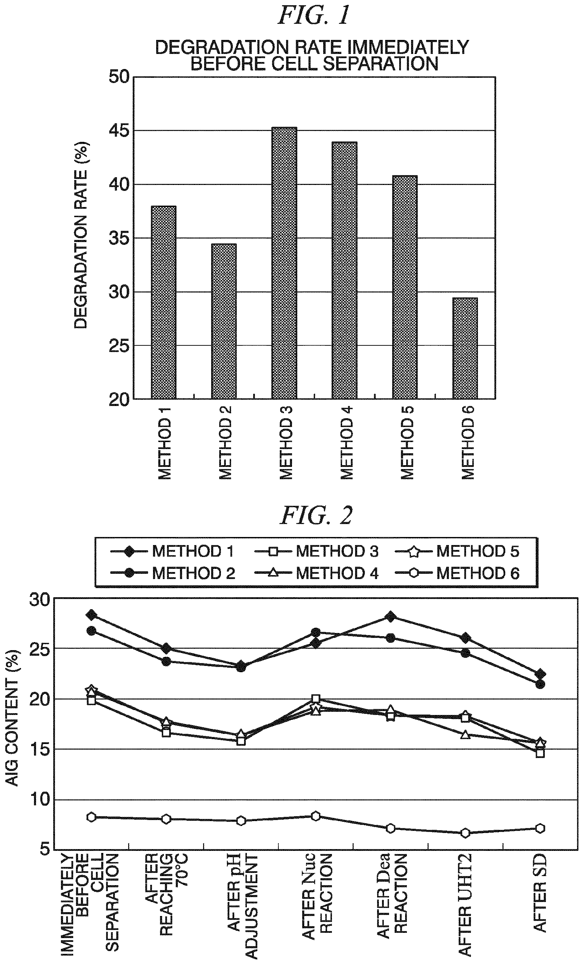

The results of measuring the degradation rate for each of the samples immediately before cell separation are shown in FIG. 1. In methods 3 and 4, the degradation rate was a particularly high value of about 45%, and the degradation rate was also above 40% in method 5. Based on the fact that the degradation rate was higher in method 4, in which the UHT sterilization was performed after the alkali extraction, than in method 1 in which the alkali extraction was performed after the UHT sterilization, it was evident that a larger proportion of the fungal cells could be degraded by performing the alkali extraction treatment before sterilization. Further, method 5 in which the sterilization treatment of the yeast cells was performed at a low temperature of 60°C for a long period of 30 minutes yielded a higher degradation rate than method 1 in which the sterilization treatment was performed by UHT sterilization. On the other hand, in method 6 in which an alkali extraction was not performed prior to the centrifugal separation treatment, the degradation rate was less than 30%, a result no different from that obtained using only typical hot water extraction.

The results of measuring the AIG content of each sample are shown in FIG. 2. Through all of the steps, the samples from method 1 and method 2 had the highest AIG content values. It is surmised that the reason that the AIG content results were lower for the samples in methods 3 to 5 that exhibited higher degradation rates is that a variety of other substances besides the nucleic acids were extracted in larger amounts from the yeast cells. On the other hand, the AIG content for the samples in method 6 were extremely low, indicating that almost no nucleic acids were extracted from the yeast cells.

In addition, in the case of the samples prepared using method 4 and method 5, the obtained yeast extracts had a stronger color than the other extracts. It is thought that this is because the extraction treatment was conducted before adequate inactivation of the fungal cells. On the other hand, the sample of method 6 in which almost no degradation occurred, and the sample of method 3 which had a high degradation rate but also contained a large amount of neutral salts displayed comparatively weak coloring.

<Amino Acid Composition>

The free amino acid composition of the powdered yeast extract (sample after SD) obtained in each method was investigated. Measurement was performed using an Acquity UPLC analyzer (manufactured by Waters Corporation, USA) and the AccQ-Tag Ultra labeling method. This measurement method enables the selective quantification of free amino acids in the sample.

The results revealed that there was no significant difference in the free amino acid composition in the powdered yeast extracts 1 to 6 (not shown in the drawings). In the powdered yeast extract 3, the GABA content was high, but this is thought to be due to the fact that an acid treatment was performed prior to inactivation of the yeast cells, resulting in a conversion of glutamic acid to GABA.

<Sensory Evaluations>

The taste of a 1.0% by mass aqueous solution of the powdered yeast extract (sample after SD) obtained from each method was evaluated. Evaluation was performed by seven specialist yeast extract panelists, and the samples were ranked in order of the strength of flavor (with the strongest flavor being ranked 1 and the weakest flavor being ranked 6). The evaluation results of each panelist for the yeast extracts obtained from the various methods (namely, the flavor strength rankings of each sample) are shown in Table 1, and free comments from the panelists are shown in Table 2.

[Table 1]

|  | Method 1 | Method 2 | Method 3 | Method 4 | Method 5 | Method 6 |
|---|---|---|---|---|---|---|
| Panelist 1 | 1 | 2 | 3 | 4 | 5 | 6 |
| Panelist 2 | 2 | 1 | 5 | 3 | 4 | 6 |
| Panelist 3 | 1 | 3 | 4 | 5 | 2 | 6 |
| Panelist 4 | 1 | 2 | 5 | 3 | 4 | 6 |
| Panelist 5 | 2 | 1 | 5 | 3 | 4 | 6 |
| Panelist 6 | 1 | 2 | 3 | 4 | 5 | 6 |
| Panelist 7 | 2 | 1 | 5 | 4 | 3 | 6 |
| Total | 10 | 12 | 30 | 26 | 27 | 42 |

[Table 2]

| Yeast extract | Free Comments |
|---|---|
| Method 1 | Strong flavor, strong aftertaste, strong initial flavor |
| Method 2 | Strong flavor, strong aftertaste, strong initial flavor, similar to yeast extract of method 1, clean taste |
| Method 3 | acidic taste, weak |
| Method 4 | unpleasant flavor, thin, acidic taste |
| Method 5 | astringent, weak, thin, |
| Method 6 | weak flavor, burnt taste, roasted |

These results revealed that the yeast extracts obtained in methods 1 and 2 (corresponding with the method of producing a yeast extract according to the present invention) had the lowest total values for the rankings of the seven panelists, confirming that these extracts exhibited superior flavor to the other yeast extracts. Further, the yeast extract obtained in method 6 where almost no nucleic acids were extracted had a much worse ranking than the other extracts. Furthermore, the yeast extracts obtained using the methods according to methods 3 to 5 exhibited noticeable acidity and/or unpleasant flavors. It is surmised that this is because excessive amounts of substances other than the nucleic acids were also extracted.

[Example 2]

The conditions for the UHT sterilization treatment of the yeast extract were altered, and the effects on the degrdation rate and the AIG content were investigated.

First, the prepared yeast suspension (with a fungal cell solid fraction concentration of 15% by mass) was subjected to UHT sterilization under the temperature and time conditions shown in Table 3. A portion of the sterilized yeast suspension was sampled for measurement purposes (sample after UHT1), and the remainder was adjusted to 70°C, a 25% by mass aqueous solution of sodium hydroxide was added to adjust the pH to 7.9, and an extraction treatment was then performed by incubation at 70°C for 4.5 hours. Portions of the yeast suspension were sampled for measurement purposes after 0 hours, 1.5 hours, 3 hours and 4.5 hours (following completion) had elapsed from the start of the extraction (sample at 0 h extraction, sample at 1.5 h extraction, sample at 3 h extraction, and sample at 4.5 h extraction, wherein the sample at 4.5 h extraction corresponds with the sample immediately before cell separation in Example 1).

The remaining yeast extract was subjected to a centrifugal separation treatment, the supernatant (yeast extract) was collected and heated to 70°C, and a portion of the supernatant was then sampled for measurement purposes (sample after reaching 70°C). A 47% by mass aqueous solution of sulfuric acid was added to the remaining yeast extract to adjust the pH to 5.0, and a portion of the extract was then sampled for measurement purposes (sample after pH adjustment). Subsequently, the same procedures as those described in method 1 were used to subject the remaining yeast extract to a nuclease treatment and then a deaminase treatment, followed by an inactivation treatment, a diatomaceous earth filtration treatment, a concentration treatment and a sterilization treatment, and the yeast extract was then dried by spray drying to obtain a powdered yeast extract.

For each sample, the degradation rate (%) and the AIG content (%) were measured in the same manner as described in Example 1. The measurement results are shown in Table 3. The results revealed that the test samples 1 and 2 in which the sterilization temperature of the UHT sterilization prior to the extraction treatment was 120°C tended to exhibit a higher degradation rate than the test samples 3 and 4 in which the sterilization temperature was 100°C. However, this difference was largest immediately after the UHT sterilization treatment, and once 3 hours had elapsed from the start of the extraction treatment, the degradation rates were substantially similar. Further, the AIG content was also higher for the test samples 1 and 2 in which the sterilization temperature of the UHT sterilization prior to the extraction treatment was 120°C than for the test samples 3 and 4 in which the sterilization temperature was 100°C in the period from the completion of the UHT sterilization treatment until the start of the extraction treatment, but once 1.5 hours had elapsed from the start of the extraction treatment, the AIG content values were substantially similar. In other words, regardless of any difference in the conditions of the sterilization treatment performed prior to the extraction treatment, a yeast extract with a high AIG content was able to be prepared in all of the test samples.

[Table 3]

| | Test Sample No. | | | |
|---|---|---|---|---|
| | 1 | 2 | 3 | 4 |
| UHT1 conditions | | | | |
| Temperature | 120°C | 120°C | 100°C | 100°C |
| Time | 80 seconds | 40 seconds | 80 seconds | 40 seconds |
| | | | | |
| Degradation rate | | | | |
| Sample after UHT1 | 25.6% | 23.6% | 23.7% | 23.4% |
| Sample at 0 h extraction | 29.9% | 29.2% | 28.0% | 27.6% |
| Sample at 1.5 h extraction | 35.6% | 35.3% | 34.1% | 34.0% |
| Sample at 3.0 h extraction | 36.1% | 35.3% | 35.3% | 34.9% |
| Sample at 4.5 h extraction | 36.8% | 36.0% | 35.8% | 35.3% |
| | | | | |
| AIG content | | | | |
| Sample after UHT1 | 10.9% | 8.5% | 8.0% | 7.1% |
| Sample at 0 h extraction | 17.0% | 15.6% | 12.8% | 12.7% |
| Sample at 1.5 h extraction | 25.6% | 24.7% | 25.0% | 24.5% |
| Sample at 3.0 h extraction | 26.1% | 25.7% | 25.5% | 25.9% |
| Sample at 4.5 h extraction | 25.5% | 25.6% | 25.7% | 25.6% |
| Sample after reaching 70°C | 23.1% | 22.8% | 23.1% | 23.0% |
| Sample after pH adjustment | 22.0% | 22.0% | 22.1% | 22.3% |

[Example 3]

The conditions for the extraction treatment of the yeast cells were altered, and the effects on the degradation rate and the AIG content were investigated.

Specifically, the conditions for the extraction treatment were set as shown in Table 4, the extraction time was set to 6 hours, and with the exception of sampling portions of the yeast suspension for measurement purposes after 0 hours, 1.5 hours, 3 hours, 4.5 hours and 6 hours (following completion) had elapsed from the start of the extraction (sample at 0 h extraction, sample at 1.5 h extraction, sample at 3 h extraction, sample at 4.5 h extraction, and sample at 6 h extraction), a powdered yeast extract was prepared from the yeast suspension in the same manner as described in Example 2.

[Table 4]

| | Test sample No. | | | | | |
|---|---|---|---|---|---|---|
| | m1 | m2 | m3 | m4 | m5 | m6 |
| Extraction temperature (°C) | 70 | 70 | 70 | 75 | 75 | 80 |
| Extraction time (h) | 6 | 6 | 6 | 6 | 6 | 6 |
| Extraction pH | 7.9 | 7.7 | 7.5 | 7.7 | 7.5 | 7.7 |

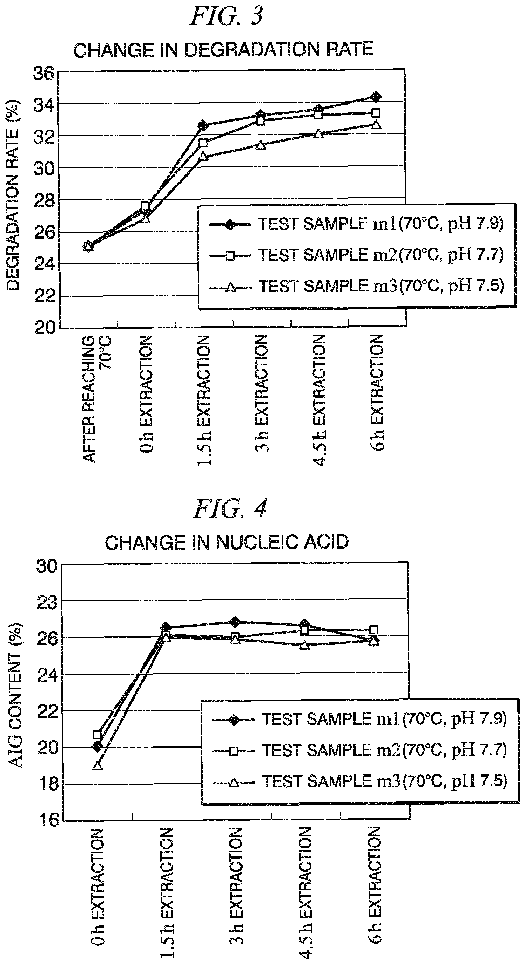

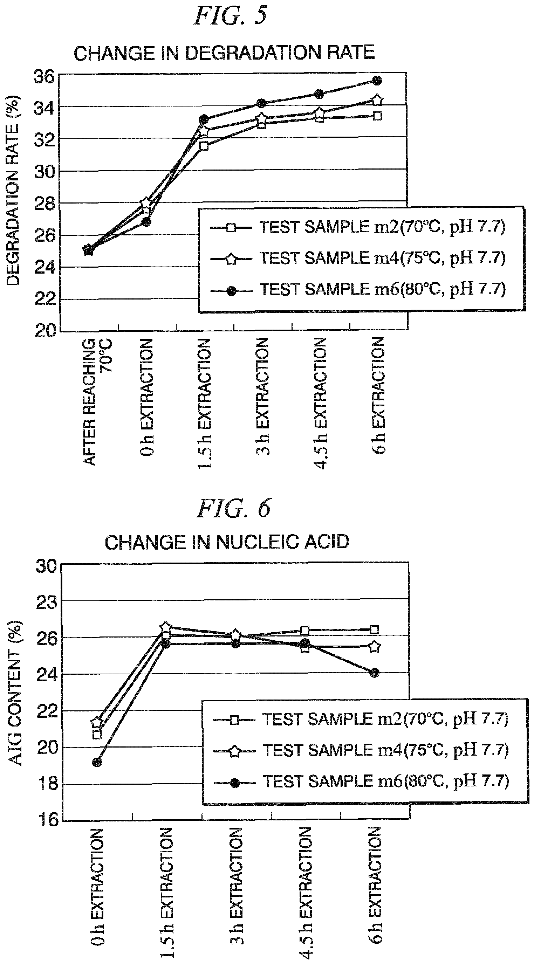

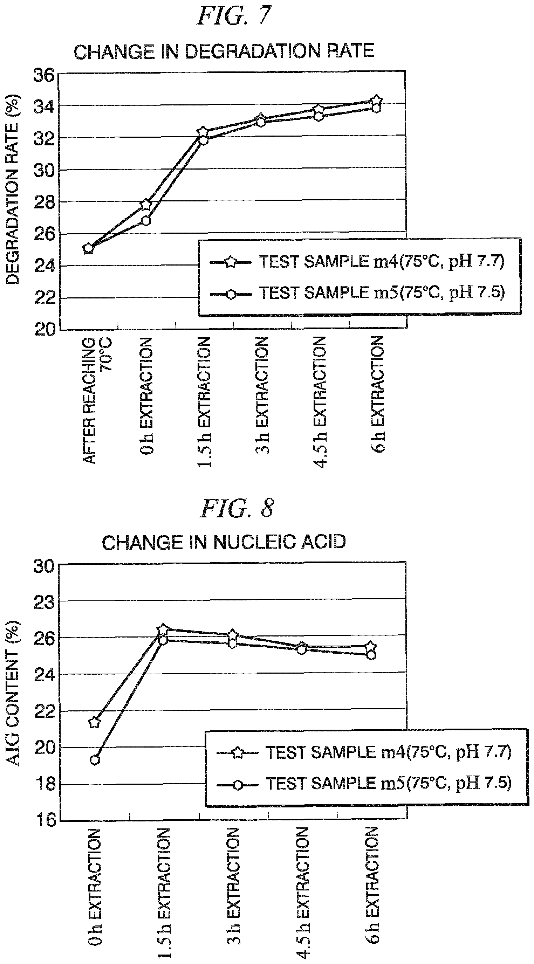

For each sample, the degradation rate (%) and the AIG content (%) were measured in the same manner as described in Example 1. The measurement results are shown in FIG. 3 to FIG. 8. For the test samples m1 to m3 in which the extraction temperature was set to 70°C, the change in the degradation rate (the degradation rate of each sample) is shown in FIG. 3, and the change in the AIG content (the AIG content of each sample) is shown in FIG. 4. Similarly, for the test samples m2, m4 and m6 in which the extraction pH was set to 7.7, the change in the degradation rate is shown in FIG. 5 and the change in the AIG content is shown in FIG. 6, and for the test samples m4 and m5 in which the extraction temperature was set to 75°C, the change in the degradation rate is shown in FIG. 7 and the change in the AIG content is shown in FIG. 8. When the extraction temperature was constant, a tendency was observed for a higher degradation rate when the pH during the extraction treatment ws higher, but there was little difference in the AIG content (FIGS. 3, 4, 7 and 8). When the pH in the extraction treatment was constant, a tendency was observed for a higher degradation rate as the temperature increased, but there was little difference in the AIG content (FIGS. 5 and 6). In other words, regardless of any difference in the conditions of the extraction treatment, a yeast extract with a high AIG content was able to be prepared in all of the test samples.

[Example 4]

For each of the yeasts shown below in Table 5, an extract extracted from the yeast cells was subjected to a nuclease treatment and a deaminase treatment to prepare a yeast extract, and the dry weight IG content (total content of inosinic acid and guanylic acid) of the obtained yeast extract was measured. In the table below, the "IFO number" means the registration number with the Institute for Fermentation, Osaka.

[Table 5]

| Strain number | Scientific name | Remarks |
|---|---|---|
| IFO 555 | Saccharomyces cerevisiae | Generally available strain |
| IFO 2043 | Saccharomyces cerevisiae | Generally available strain |
| IFO 2044 | Saccharomyces cerevisiae | Generally available strain |
| Kyokai No. 7 | Saccharomyces cerevisiae | Generally available strain (available from Brewing Society of Japan |
| IFO 0751-1264 | Saccharomyces pastorianus | Generally available strain |
| IFO 0615 | Saccharomyces bayanus | Generally available strain |
| IFO 0316-1173 | Saccharomyces unisporus | Generally available strain |
| IFO 0619 | Candida utilis | Generally available strain |
| IFO 9626 | Candida utilis | Generally available strain |
| IFO 0639 | Candida utilis | Generally available strain |
| AB 5803 | Saccharomyces cerevisiae | Mutant strain (owned by Asahi) |
| AB 5811 | Saccharomyces cerevisiae | Mutant strain (owned by Asahi) |
| AB 5815 | Saccharomyces cerevisiae | Mutant strain (owned by Asahi) |

Specifically, a yeast cell suspension (yeast suspension) with a solid fraction of 15% by mass was first prepared in the same manner as described in <Preparation of Yeast Culture> in Example 1, and yeast extracts were then prepared in the same manner as <Method 1> and <Method 5> from Example 1.

Using the same procedure as Example 1, the IG content of the sample after the Dea reaction, and the degradation rate of the sample immediately before cell separation (the sample following alkali extraction, but immediately before cell separation and collection by the centrifugal separation treatment) were investigated. The measurement results are shown in Table 6. The results revealed that for each of the fungal strains, the IG content of the sample after the Dea reaction was higher for method 1 than for method 5, enabling the preparation of a yeast extract with a high nucleic acid content. Further, with the exception of the IFO 0639 strain, the degradation rate for the sample immediately before cell separation was higher for method 5 for all of the fungal strains for which the degradation rate was measured, indicating that excessive amounts of substances other than the nucleic acids had also been extracted.

[Table 6]

| Strain number | IG content (%) of sample after Dea reaction | | Degradation rate (%) immediately before cell separation | |
|---|---|---|---|---|
| | Method 1 | Method 5 | Method 1 | Method 5 |
| IFO 555 | 13.8 | 8.1 | 38.0 | 38.5 |
| IFO 2043 | 12.8 | 8.2 | 35.3 | 39.6 |
| IFO 2044 | 11.4 | 7.4 | 34.9 | 38.8 |
| Kyokai No. 7 | 9.8 | 8.5 | 38.8 | 40.4 |
| IFO 0751-1264 | 12.4 | 11.5 | 37.0 | 39.0 |
| IFO 0615 | 9.6 | 5.1 | 28.5 | 33.1 |
| IFO 0316-1173 | 9.1 | 7.9 | 32.9 | 37.1 |
| IFO 0619 | 15.8 | 12.4 | - | - |
| IFO 9626 | 9.5 | 7.4 | 39.2 | 41.1 |
| IFO 0639 | 10.5 | 5.2 | 42.4 | 40.8 |
| AB 5803 | 14.9 | 10.0 | 38.4 | 42.8 |
| AB 5811 | 21.4 | 11.6 | 35.1 | 41.8 |
| AB 5815 | 17.6 | 8.7 | 34.7 | 43.4 |

INDUSTRIAL APPLICABILITY

By using the method of producing a yeast extract according to the present invention, a yeast extract with a higher nucleic acid content than that obtainable using conventional methods of producing yeast extracts can be prepared from yeast cells.

**Claims**

1. A method of producing a yeast extract comprising:
   collecting yeast cells following culturing and optionally washing them;

   (1) a step of subjecting the collected yeast cells to a heat sterilization at 100 to 130°C for 10 to 90 seconds;
   (2) a step of preparing a yeast extract by subjecting the yeast cells sterilized in step (1) to an extraction treatment at 50 to 85°C and a pH of 7 to 10;
   (3) a step, performed after step (2), of subjecting the obtained yeast extract to a solid-liquid separation treatment to remove at least a portion of any insoluble matter;
   (4) a step, performed after step (3), of subjecting the yeast extract from which the insoluble matter has been removed to a nuclease treatment and a deaminase treatment; and
   (5) a step, performed after step (4), of subjecting the yeast extract to a heat sterilization treatment.

2. The method of producing a yeast extract according to Claim 1, wherein the extraction treatment in step (2) is performed at a pH of 7.4 to 10.

3. The method of producing a yeast extract according to Claim 1 or 2, wherein the nuclease treatment and the deaminase treatment in step (4) are performed at a pH of at least 4.0 but less than 7.

4. The method of producing a yeast extract according to any one of Claims 1 to 3, further comprising, after step (5):

(6) a filtering step of filtering the yeast extract; and
(7) a drying step of drying a filtrate obtained in the filtering step.

5. The method of producing a yeast extract according to Claim 4, further comprising, after the filtering step (6) but before the drying step (7):

(6-1) a concentration step of concentrating a filtrate obtained in the filtering step (6), and
(6-2) a heat sterilization step of subjecting a concentrate obtained in the concentration step (6-1) to a heat sterilization treatment.

6. The method of producing a yeast extract according to Claim 4 or 5, wherein the filtering is performed by diatomaceous earth filtration.

7. The method of producing a yeast extract according to claim 1, wherein the heat sterilization in the step (1) is conducted at a temperature in a range of 100 to 125°C, for a time period in a range of 40 to 80 seconds.


**Patentansprüche**

1. Ein Verfahren zur Herstellung eines Hefeextrakts, umfassend:
Sammeln von Hefezellen nachdem diese kultiviert und optional gewaschen wurden;

(1) einen Schritt der Hitzesterilisation der gesammelten Hefezellen bei 100 bis 130°C für 10 bis 90 Sekunden;
(2) einen Schritt zur Herstellung eines Hefeextrakts durch Unterziehen der in Schritt (1) sterilisierten Hefezellen einer Extraktionsbehandlung bei 50 bis 85°C und einem pH von 7 bis 10;
(3) einen Schritt, der nach dem Schritt (2) durchgeführt wird, um den erhaltenen Hefeextrakt einer Fest-Flüssig-Trennbehandlung zu unterwerfen, um mindestens einen Teil von irgendeinem unlöslichem Material zu entfernen;
(4) einen Schritt, der nach Schritt (3) durchgeführt wird, in dem der Hefeextrakt, von dem das unlösliche Material entfernt wurde, einer Nukleasebehandlung und einer Deaminasebehandlung unterworfen wird; und
(5) einen Schritt, der nach Schritt (4) durchgeführt wird, um den Hefeextrakt einer Hitzesterilisationsbehandlung zu unterziehen.

2. Das Verfahren zur Herstellung eines Hefeextrakts nach Anspruch 1, wobei die Extraktionsbehandlung in Schritt (2) bei einem pH von 7,4 bis 10 durchgeführt wird.

3. Das Verfahren zur Herstellung eines Hefeextrakts nach Anspruch 1 oder 2, wobei die Nukleasebehandlung und die Deaminasebehandlung in Schritt (4) bei einem pH von mindestens 4,0 aber weniger als 7 durchgeführt werden.

4. Das Verfahren zur Herstellung eines Hefeextrakts nach einem der Ansprüche 1 bis 3, ferner umfassend nach Schritt (5):

(6) einen Filtrierschritt zum Filtrieren des Hefeextrakts; und
(7) einen Trocknungsschritt zum Trocknen eines Filtrats, das in dem Filtrierschritt erhalten wurde.

5. Das Verfahren zur Herstellung eines Hefeextrakts nach Anspruch 4, ferner umfassend nach dem Filtrierschritt (6) aber vor dem Trocknungsschritt (7):

(6-1) einen Konzentrationsschritt des Konzentrierens eines Filtrats, das in dem Filtrierschritt (6) erhalten wurde und
(6-2) einen Hitzesterilisationsschritt, bei dem ein in dem Konzentrationsschritt (6-1) erhaltenes Konzentrat einer Hitzesterilisationsbehandlung unterzogen wird.

6. Das Verfahren zur Herstellung eines Hefeextrakts nach Anspruch 4 oder 5, wobei das Filtrieren durch Filtration mit Diatomeenerde durchgeführt wird.

**7.** Das Verfahren zur Herstellung eines Hefeextrakts nach Anspruch 1, wobei die Hitzesterilisation in Schritt (1) bei einer Temperatur in einem Bereich von 100 bis 125°C für eine Zeitdauer in einem Bereich von 40 bis 80 Sekunden durchgeführt wird.


**Revendications**

**1.** Méthode de production d'un extrait de levure comprenant :
la collecte de cellules de levure après culture et éventuellement lavage ;

(1) une étape de soumission des cellules de levure collectées à une stérilisation thermique à 100-130 °C pendant 10 à 90 secondes ;
(2) une étape de préparation d'un extrait de levure par soumission des cellules de levure stérilisées à l'étape (1) à un traitement d'extraction à 50-85 °C et un pH de 7 à 10 ;
(3) une étape, effectuée après l'étape (2), de soumission de l'extrait de levure obtenu à un traitement de séparation solide-liquide pour éliminer au moins une partie des matières insolubles ;
(4) une étape, effectuée après l'étape (3), de soumission de l'extrait de levure dont les matières insolubles ont été éliminées à un traitement à la nucléase et à un traitement à la désaminase ; et
(5) une étape, effectuée après l'étape (4), de soumission de l'extrait de levure à un traitement de stérilisation thermique.

**2.** Méthode de production d'un extrait de levure selon la revendication 1 dans laquelle le traitement d'extraction à l'étape (2) est effectué à un pH de 7,4 à 10.

**3.** Méthode de production d'un extrait de levure selon la revendication 1 ou 2, dans laquelle le traitement à la nucléase et le traitement à la désaminase à l'étape (4) sont effectués à un pH d'au moins 4,0 mais inférieur à 7.

**4.** Méthode de production d'un extrait de levure selon l'une quelconque des revendications 1 à 3, comprenant en outre, après l'étape (5) :

(6) une étape de filtration pour filtrer l'extrait de levure ; et
(7) une étape de séchage pour sécher un filtrat obtenu dans l'étape de filtration.

**5.** Méthode de production d'un extrait de levure selon la revendication 4, comprenant en outre, après l'étape de filtration (6) mais avant l'étape de séchage (7) :

(6-1) une étape de concentration pour concentrer un filtrat obtenu dans l'étape de filtration (6), et
(6-2) une étape de stérilisation thermique pour soumettre un concentré obtenu à l'étape de concentration (6-1) à un traitement de stérilisation thermique.

**6.** Méthode de production d'un extrait de levure selon la revendication 4 ou 5, dans laquelle la filtration est effectuée par filtration sur diatomées.

**7.** Méthode de production d'un extrait de levure selon la revendication 1, dans laquelle la stérilisation thermique à l'étape (1) est mise en oeuvre à une température dans la plage de 100 à 125 °C, pendant une durée dans la plage de 40 à 80 secondes.

## FIG. 1

DEGRADATION RATE IMMEDIATELY
BEFORE CELL SEPARATION

## FIG. 2

## FIG. 3

### CHANGE IN DEGRADATION RATE

Legend:
- TEST SAMPLE m1 (70°C, pH 7.9)
- TEST SAMPLE m2 (70°C, pH 7.7)
- TEST SAMPLE m3 (70°C, pH 7.5)

Y-axis: DEGRADATION RATE (%)
X-axis: AFTER REACHING 70°C, 0h EXTRACTION, 1.5h EXTRACTION, 3h EXTRACTION, 4.5h EXTRACTION, 6h EXTRACTION

## FIG. 4

### CHANGE IN NUCLEIC ACID

Legend:
- TEST SAMPLE m1 (70°C, pH 7.9)
- TEST SAMPLE m2 (70°C, pH 7.7)
- TEST SAMPLE m3 (70°C, pH 7.5)

Y-axis: AIG CONTENT (%)
X-axis: 0h EXTRACTION, 1.5h EXTRACTION, 3h EXTRACTION, 4.5h EXTRACTION, 6h EXTRACTION

## FIG. 5

### CHANGE IN DEGRADATION RATE

Legend:
- ☐ TEST SAMPLE m2(70°C, pH 7.7)
- ☆ TEST SAMPLE m4(75°C, pH 7.7)
- ● TEST SAMPLE m6(80°C, pH 7.7)

Y-axis: DEGRADATION RATE (%)

X-axis: AFTER REACHING 70°C, 0 h EXTRACTION, 1.5 h EXTRACTION, 3 h EXTRACTION, 4.5 h EXTRACTION, 6 h EXTRACTION

## FIG. 6

### CHANGE IN NUCLEIC ACID

Legend:
- ☐ TEST SAMPLE m2(70°C, pH 7.7)
- ☆ TEST SAMPLE m4(75°C, pH 7.7)
- ● TEST SAMPLE m6(80°C, pH 7.7)

Y-axis: AIG CONTENT (%)

X-axis: 0 h EXTRACTION, 1.5 h EXTRACTION, 3 h EXTRACTION, 4.5 h EXTRACTION, 6 h EXTRACTION

## FIG. 7

**CHANGE IN DEGRADATION RATE**

## FIG. 8

**CHANGE IN NUCLEIC ACID**

**REFERENCES CITED IN THE DESCRIPTION**

**Patent documents cited in the description**

- EP 0299078 A
- JP 2002101846 A
- JP 2604306 B
- JP 2011512130 W